(19)

Europäisches Patentamt
European Patent Office
Office européen des brevets

(11) **EP 2 254 071 A1**

(12) **EUROPEAN PATENT APPLICATION**

(43) Date of publication:
**24.11.2010 Bulletin 2010/47**

(51) Int Cl.:
***G06F 21/00*** *(2006.01)*

(21) Application number: **09305554.9**

(22) Date of filing: **17.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **20.05.2009 EP 09305462**

(71) Applicant: **Thomson Licensing**
**92130 Issy-les-Moulineaux (FR)**

(72) Inventors:
• **Maetz, Yves**
  **92648 Boulogne cedex (FR)**
• **Onno, Stéphane**
  **92648 Boulogne cedex (FR)**
• **Heen, Olivier**
  **92648 Boulogne cedex (FR)**

(74) Representative: **Berthier, Karine**
**THOMSON**
**European Patent Operations**
**46, Quai Alphonse Le Gallo**
**92100 Boulogne Billancourt (FR)**

(54) **Semantic graphical password system**

(57)    A graphical password system. A device (400) displays a background image (110) and a number of icons (130). In order to generate a password, a user selects (320) the background image (110) and then iteratively selects (330) and places (340) a number of icons on the background image (110). The user then instructs the device to generate (360) the password based on the background image (110), the selected icons (130) and their location, and possibly the order of input. As the placed icons (130) preferably modify the displayed screen, the invention can enable the creation of a semantic graphical password, which is easy to retain, while it at the same time is possible to make the password strong.

Figure 1

**Description**

TECHNICAL FIELD

The present invention relates generally to user authentication, and more particularly to graphical passwords.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It is a long established practice to use passwords to protect access to various devices such as for example computers and mobile phones. The most common password system requires a user to use the keyboard to input a character string. A problem with this is that strong passwords - i.e. passwords that are difficult to guess - are often difficult to retain and vice versa.

As it often is easier to remember images than text, a number of solutions have proposed the use of graphical passwords.

In US 5559961, Blonder presents a technique in which a user inputs the password by clicking on a sequence of predetermined zones in a predetermined image.

Passlogix developed this idea according to Suo et al., "Graphical Passwords: A Survey", Department of Computer Science, Georgia State University - http://www.acsac.org/2005/papers/89.pdf. To enter a password, users click on various items in an image in a predefined sequence.

S. Wiedenbeck et al. also extended Blonder's scheme in a number of articles:

- "Authentication Using Graphical Passwords: Basic Results," in Human-Computer Interaction International (HCII 2005). Las Vegas, NV, 2005
- "Authentication Using Graphical Passwords: Effects of Tolerance and Image Choice," in Symposium on Usable Privacy and Security (SOUPS). Carnegie-Mellon University, Pittsburgh, 2005.
- "PassPoints: Design and Longitudinal Evaluation of a Graphical Password System," International Journal of Human Computer Studies, vol. 63, 2005, pages 102-127.

This system eliminated predefined boundaries and allowed the use of arbitrary images, so that a user can click on anywhere in an image to create a password.

Still according to Suo et al., Passpoint developed a system in which a password is entered by selecting one face among several a plurality of times.

While those systems work reasonably well, they do however suffer from some disadvantages:

- The pictures are chosen from a set of pictures provided by the system and not by the user. Therefore, customization of the password is limited.
- Most of the systems are based on a succession of selections without any semantic connection between each of them. In this case, they do not allow building a password based on a story, which is easy to remember for the user. In the prior-art solutions, users tend to generate an easy but consequently more guessable password.
- They are vulnerable to shoulder surfing: an attacker may guess the password by observing the selections/clicks made by the user.

It can therefore be appreciated that there is a need for a solution that overcomes these problems and provides a system that can enable strong passwords that are easy to remember. Ideally, the system is also resistant to shoulder surfing. The present invention provides such a solution.

SUMMARY OF INVENTION

In a first aspect, the invention is directed to a method of generating a secret value. A selection image is chosen among a plurality of selection images and placed on a background image, thereby producing a new image. This is iterated until a desired number of selection images have been placed on the background image. The secret value is then generated by processing the chosen selection images and their location.

In a first preferred embodiment, the background image is selected.

In a second preferred embodiment, the processing further takes into account the background image to generate the secret value.

In a third preferred embodiment, the processing further takes into account at least one of the colour of the chosen selection images and the rotation of the chosen selection images to generate the secret value.

In a fourth preferred embodiment, the processing further takes into account the order of placement of the chosen selection images to generate the secret value.

In a sixth preferred embodiment, the secret value is a password.

In a second aspect, the invention is directed to a device for generation of a secret value. The device comprises a screen adapted to display a background image and a plurality of selection images, an input unit adapted to receive user input for iteratively choosing a selection image and for placing the chosen selection image on the background image, and a processor adapted to generate the secret value based on the chosen selection images and their location on the background image.

In a first preferred embodiment, the processor is further adapted to generate the secret value also from the background image.

In a second preferred embodiment, the processor is further adapted to generate the secret value also from the order of placement of the chosen selection images.

In a third preferred embodiment, the input unit further enables a user to do at least one of: change the colour of a selection image and rotate the selection image.

BRIEF DESCRIPTION OF DRAWINGS

Preferred features of the present invention will now be described, by way of non-limiting example, with reference to the accompanying drawings, in which

Figure 1 illustrates an exemplary screen image that may be used with the invention;
Figures 2A-2D illustrate an exemplary creation of a graphical password using a preferred embodiment of the method according to the invention;
Figure 3 illustrates a flow chart of a method according to a preferred embodiment of the present invention; and
Figure 4 illustrates a block chart of an apparatus according to a preferred embodiment of the present invention.

DESCRIPTION OF EMBODIMENTS

A main inventive idea of the present invention is to generate a secret by choosing and combining pictures on a screen, more precisely by selecting and placing icons at chosen positions on a chosen background picture, preferably in a semantic manner thus creating a semantic graphical password. It allows the user to map a picture based password according to a story, therefore makes it easier to remember. Moreover, the resulting password is itself a picture and as the human brain stores pictures in the long term memory area, the chances to recall the password are improved. To enter the password, the user selects and places the chosen icons on the background picture at the correct positions.

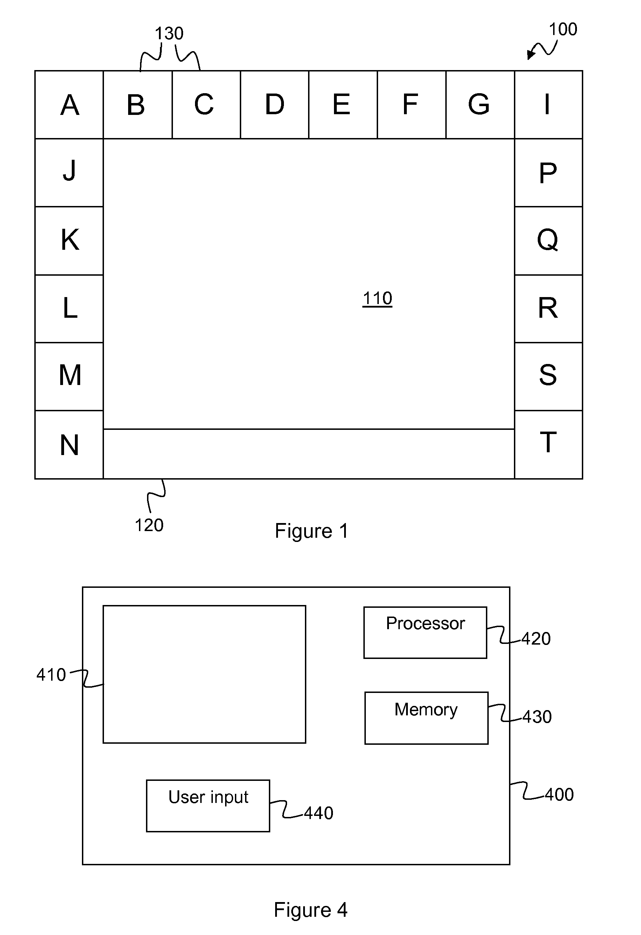

Figure 1 illustrates an exemplary screen image 100 that may be used both to create a graphical password and to enter such a password. The screen image 100 comprises a background image 110 in the centre, a control bar 120 and a number of images called icons 130. For illustrative purposes, no central image is shown and the icons are represented by letters A-T. It will however be appreciated that practically any kind of image and icons may be used, but it is preferred that they enable the construction of a semantic 'story' by the user. An example could be: "A giraffe went to buy a hat, but discovered that she had no money...". For that reason, concrete image are preferred over abstract ones.

It is preferred that the background image 110 may be selected by the user, advantageously from a pre-selected set, but it is also possible to offer the user a single image.

The control bar 120 is intended to aid the user. It may for example comprise controls such as "change background", "change set of icons", "reset" and "validate".

To create a graphical password, the user optionally selects one of the available backgrounds. The user then drags and drops (or selects and indicates position for) a number of icons 130 into the background image 110. Finally, the user validates the choice and the password is generated.

The password will be based on:

- the selected background image, and
- the position of each of the selected icons.

The position is advantageously given by a grid, either by having each icon located in one of a plurality of specified areas or by using 'snap' to fix the icons to one of a number of predetermined points.

This set of data is then processed using any suitable algorithm to derive a corresponding secret, which then may be used in a standard cryptographic system, depending on the type of application. For example, it could provide user authentication or encryption of data.

It will be appreciated that the password space may be enlarged by also taking into account the order of selection of the icons and/or by enabling rotation of the icons and also using this data as input. It is also conceivable to enable the user to colour the icons and use the colour information as further input.

In a preferred embodiment, the graphical password system is implemented in a software application requiring a password before access is allowed. As an example, this application could be a password aggregator software application (such as PasswordSafe) where the user can securely store a plurality of passwords and other data in a database. The entries in this database are stored under the protection of a single "master" password that generated according to a preferred embodiment of the method of the present invention.

When starting the software application, a background image and a number of icons are preferably chosen randomly from the set of pictures available, thereby renewing the initial locations of the icons and avoiding a simple replay attack (i.e. recording the mouse movements and play back the sequence again to login).

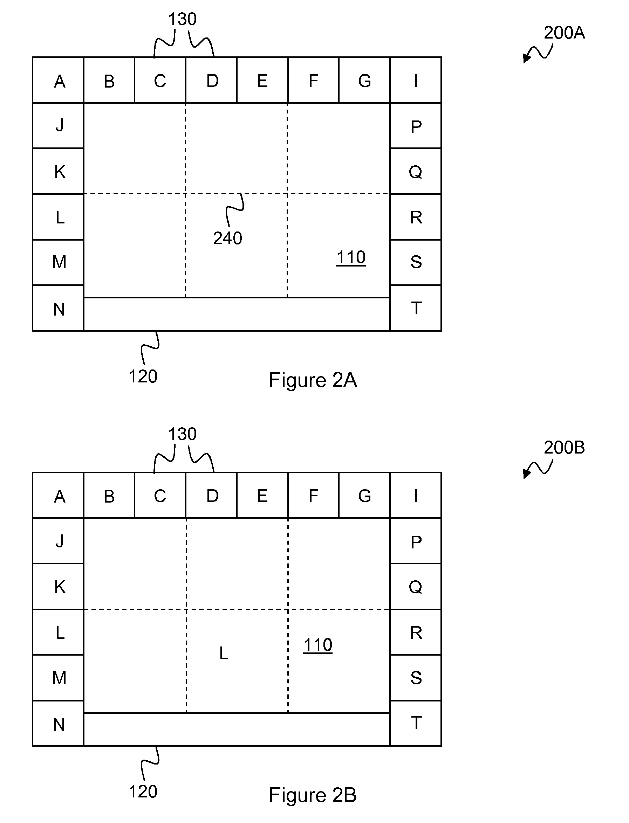

Figures 2A-2D illustrate an exemplary creation of a graphical password using a preferred embodiment of the method according to the invention.

Figure 2A illustrates the screen image 200A before any user input is made, but it will be appreciated that the same screen image may be shown after the user resets the screen image. As can be seen, the screen image 200A is quite similar to the one in Figure 1, a difference being dotted lines that illustrate a grid 240 to be used for the generation of the password. This grid may also be invisible, depending on the application, and it may also be shown on user request. The grid 240 divides the background image 110 into six distinct areas.

In a variant embodiment, at least one icon is put in the background image 110 by the system both when the password is generated and when later is input. It is preferred that the at least one icon is chosen randomly and that its location also is random. The user may then either accept the icon, move it, ignore it or erase it, depending on the chosen password.

Figure 2B illustrates the screen image 200B after the first user input: icon L (e.g. a giraffe) has been placed in a place in the lower, central area of the grid. It will be appreciated that it as advantageous to use only the shape of the icon, and not the icon box unless this is transparent, as this enables a better visibility of the screen image 200B.

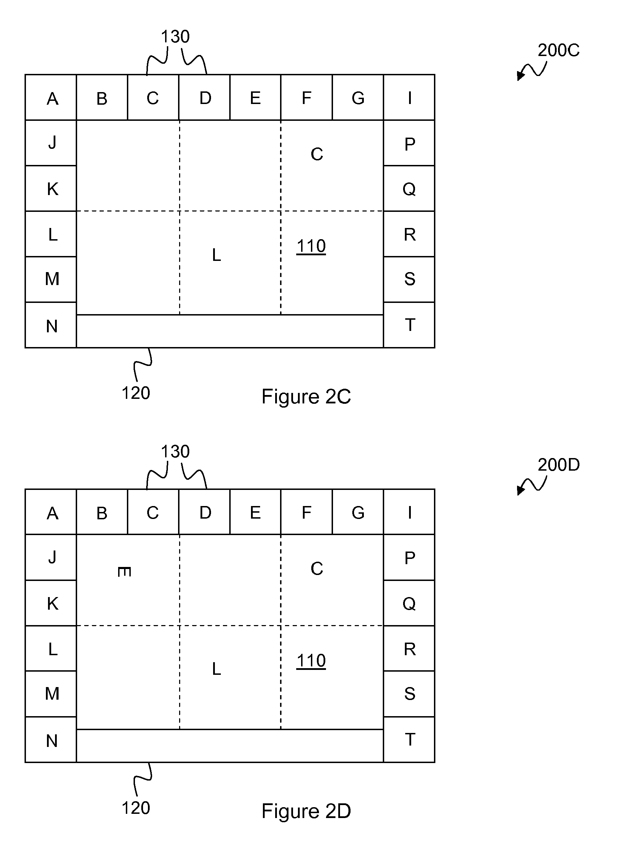

Figure 2C illustrates the screen image 200C after the second user input: icon C (e.g. a hat) has been placed in a place in the upper, right-hand area of the grid.

Figure 2D illustrates the screen image 200D after the third and final user input: icon E (e.g. money) has been placed in a place in the upper, lefthand area of the grid and rotated 90° clockwise.

The user then validates the background and the chosen icons and positions. As already mentioned, the computer application then computes a secret key derived from the user input:

- the selected background (if a plurality of backgrounds are available), and
- the selected icons, their position in the grid, their rotation and, possibly, the order in which they were chosen.

Algorithms to generate the secret key are well known and out of scope of the invention. Non-limitative examples include a combination of one or more of a hash of the resulting filename, file size, an arbitrary value extracted from the picture, and a visual hash of the picture. The different elements are combined together using simple XOR or more complex functions. This operation yields a secret that will form the binary value secret key.

In the preferred embodiment, this secret key is used as master password to enable access to the password database, possibly by decryption using a chosen algorithm. In alternative embodiments, the secret key enables access to a device (such as a mobile phone), to access private data (e.g. an online account) and so on.

It is preferred that the user sets up the system by choosing a set of possible background images and a set of pictures to be used as icons, but the system may also propose a default set of pictures both for the background and the icons. Naturally, a combination of user-selected and system-provided pictures is also possible. User-provided pictures are particularly interesting when the graphical authentication mechanism is used to access private data on mobile storage device (e.g. archive of personal photos).

As already mentioned, the user inputs a selected password in much the same way by, continuing the example, selecting the background image and putting the icons in the right place, orientation and order.

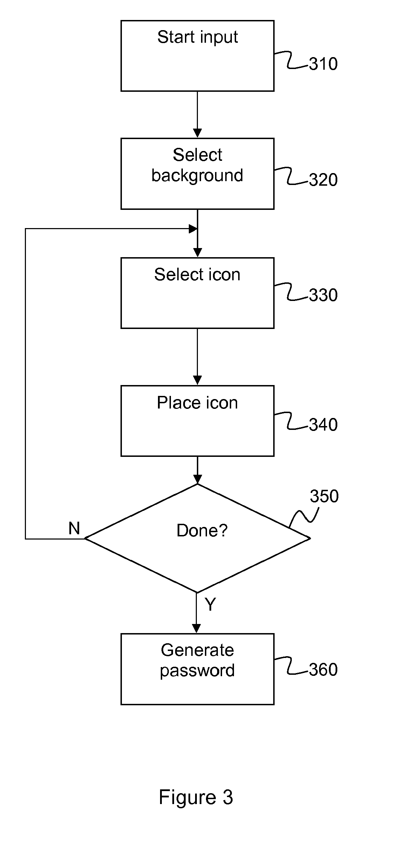

Figure 3 illustrates a flow chart of a method according to a preferred embodiment of the present invention. The method starts in step 310 when the user activates that he wishes to input a password, but it will be appreciated that this step may also be automatic, such as when a device is switched on.

In step 320, the user selects the background to be used, if this option is available.

The user then selects 330 and places 340 an icon. In variant embodiments, the user may also treat the icon, such as by rotation, by flipping horizontally or vertically, or by colouring, i.e. by changing its colour.

The method iterates the selection and placement steps until the user has finished, "Y" in step 350, after which the password is generated as previously described, step 360.

It will be appreciated that the method advantageously is identical when a password is created the first time or input at a later time.

Figure 4 illustrates a block chart of an apparatus according to a preferred embodiment of the present invention. The apparatus 400 comprises a display screen 410 adapted to display the screens illustrated in Figures 1 and 2A-2D. The apparatus 400 further comprises at least one processor 420, at least one memory 430, and user input means 440. The user input means 440 may be the display screen 410 if it is touch sensitive, but it may for example also be a mouse and/or a keyboard.

**Password space**

The password space of the graphical password system according to a preferred embodiment will now be calculated. If the system comprises a set of b background pictures, s icons and a position grid with p areas, into which the user places n icons, the number of combinations in the password space depends on whether or not the order of the icon selection is taken into account or not.

For the calculations hereinafter, it will be assumed that icons may be used more than once and that more than one icon may be put into an area

If order matters, the number of combinations is $b \times (s \times p)^n$.

If order does not matter, the number of combinations is $\dfrac{b \times (s \times p)^n}{n!}$.

Table 1 provides numerical values for a number of cases.

Table 1

| | | | | Number of combinations | | |
|---|---|---|---|---|---|---|
| b | s | p | n | Case 1 | Password of length n over [A-Za-z0-9] | Ratio case 1 vs. Password |
| 2 | 16 | 4 | 2 | 8192 | 3844 | 2,13 |
| 1 | 16 | 9 | 2 | 20736 | 3844 | 5,39 |
| 1 | 16 | 4 | 4 | 16777216 | 14776336 | 1,14 |
| 4 | 20 | 4 | 5 | 13107200000 | 916132832 | 14,31 |
| 4 | 32 | 9 | 4 | 27518828544 | 14776336 | 1862,36 |
| 16 | 32 | 16 | 8 | 7,55579E+22 | 2,1834E+14 | 346055817,48 |

As a comparison, a 4-digit PIN code has $10^4 = 10000$ combinations, and a 5-character textual password using the 26 lowercase letters, 26 uppercase letters and the 10 digits has $62^5 = 916132832$ combinations

Depending on the choice of parameters, the possible number of combinations of the system according to the preferred embodiment of the invention may vary extremely: from being similar to pin code up to a 7 character password or more.

For consumer-grade applications (e.g. PIN-code protection of device locking), placing 2 icons out of 16 on a 9-position grid (NW, N, NE, W, Center, E, SW, S, SE) gives more combinations than a traditional 4 digit PIN-code, while requiring only 4 clicks or 2 click-and-drags from the user.

Placing 5 icons out of 20 on a 4-position grid (NW, NE, SW, SE) with 4 backgrounds would lead to huge improvement (1431%) compared to a simple 5 letter textual password.

It will thus be appreciated that even a relatively limited set of icons backgrounds, the system can provide more combinations than textual passwords of the same size. In addition, the system is easily used by children and people with reading and/or writing disabilities.

It will also be appreciated that the system is scalable depending on the application to be targeted and on the audience. For example:

- for people having difficulties to place the objects precisely (disabled or elderly), the grid could be limited to a 4-area grid,
- a single background and a simple icon set could be used to limit the number of interface interactions, which may be suitable for young children, and
- a password 'length' of at least five icons could be required to ensure a minimal level of resistance to brute force.

A variant embodiment of the present invention intends to prevent or mitigate shoulder-surfing attacks. This could be done by combining the graphical selection previously described with an additional and less vulnerable keyboard selection, simultaneous to the icon positioning on the background. It could be based on a semantic or guessable order of keyboard keys (e.g. P, A, S, S, W, O, R, D for an 8 icons graphical password).

Shoulder-surfing prevention may also use techniques to hide the movements of the icons and the cursor. The following techniques may for example be used:

- once an 'picture' icon is selected, a 'common' icon (e.g. star icon) would be displayed rather than the selected 'picture' icon,
- the mouse pointer could also be reduced to one that is less visible, for example a small cross. This may be made when the user so desires, for example by pressing the 'Ctrl' key, and
- fake, moving, mouse pointers could be displayed in addition to the real one.

In addition a various further solutions may also be used prevent or mitigate a shoulder-surfing attack:

- Selection could be based also on keys, rather than just a sole click of the mouse. This could allow typing fake keys between the correct ones. With some experience, this may be done stealthily. Thus, the attacker could not guess how many clicks are used

  o A story example: "the yellow (1) dog (2) behind a great (3) tree (4)". The user types '1' for the first object, '2' for the second and so forth. While selecting icons, he types the corresponding value (e.g. when he sees a tree, he types key 4).

- The icons selected may be replaced by an empty rectangle during positioning to make the observation task more complex for the attacker.

- User could have in mind a personal pass phrase for password (e.g. pass). When typing the first icon, user must type P, etc.

It is preferable that the authentication application includes some means against brute force attacks, for example increasing the timeout delay after successive unsuccessful tries.

It will be appreciated that possible exemplary uses of the graphical password system are secure storage (USB flash, or external disk drive), where the storage system to be protected hosts:

- digital pictures, from which a particular combination of these pictures will form the password,
- an application that will be launched when authentication is needed, and will present the pictures so that the user may combine them to form the password. This application will compute the password and is then encrypt/decrypt the data.

The pictures used for the password are stored on the secured storage, which allows absolute personalization of the password. However these files should be protected against deletion.

The password system of the present invention can be particularly adapted for kids, elderly people, or disabled persons, and also for devices with no or limited keyboard (PDA, mobile phone, portable media player).

It will be appreciated that the present invention can allow a secure and flexible graphical password system than enables semantically based passwords in a way that it not possible in the ones found in the prior art.

It will also be appreciated that the present system can enable a user to save a picture of the image used to generate the password. If the order of input is taken into account, the image does not give away the entire password. And if different colours are used, then the image may be saved in grey-scale only to further increase the resistance to brute-force attacks. Doing this can enable sending the entire password over two different channels: the image over one channel and the supplementary information over the phone. Naturally, it should be possible to save an image that comprises only some of the icons used for the password generation.

Each feature disclosed in the description and (where appropriate) the claims and drawings may be provided independently or in any appropriate combination. Reference numerals appearing in the claims are by way of illustration only and shall have no limiting effect on the scope of the claims.

**Claims**

1. A method of generating a secret value, the method comprising the steps of:

   - choosing (330) a selection image (130) among a plurality of selection images (130);
   - placing (340) the chosen selection image on a background image (110), thereby producing a new image;
   - iterating the selecting and placing steps until a desired number of selection images (130) have been placed on the background image (110); and
   - generating (360) the secret value by processing the chosen selection images (330) and their location.

2. The method of claim 1, further comprising the preceding step of selecting (320) the background image (110).

3. The method of claim 1 or 2, wherein the processing further takes into account the background image to generate the secret value.

4. The method of claim 1, wherein the processing further takes into account at least one of the colour of the chosen selection images and the rotation of the chosen selection images to generate the secret value.

5. The method of claim 1, wherein the processing further takes into account the order of placement of the chosen selection images to generate the secret value.

6. The method of claim 1, wherein the secret value is a password.

7. A device (400) for generation of a secret value, the device (400) comprising:

   - a screen (410) adapted to display a background image (110) and a plurality of selection images (130);
   - an input unit (410, 440) adapted to receive user input for iteratively choosing a selection image (130) and for placing the chosen selection image on the background image (110); and
   - a processor (420) adapted to generate the secret value based on the chosen selection images and their location on the background image (130).

8. The device of claim 7, wherein the processor (420) is further adapted to generate the secret value also from the background image (110).

9. The device of claim 7, wherein the processor (420) is further adapted to generate the secret value also from the order of placement of the chosen selection images (130).

10. The device of claim 7, wherein the input unit (410, 440) further enables a user to do at least one of: change the colour of a selection image and rotate the selection image.

130

100

| A | B | C | D | E | F | G | I |
|---|---|---|---|---|---|---|---|
| J | | | | | | | P |
| K | | | | | | | Q |
| L | | | 110 | | | | R |
| M | | | | | | | S |
| N | | | | | | | T |

120

Figure 1

Processor ⌇ 420

410 ⌇

Memory ⌇ 430

User input ⌇ 440

⌇ 400

Figure 4

130

200A

| A | B | C | D | E | F | G | I |
|---|---|---|---|---|---|---|---|
| J |   |   |   |   |   |   | P |
| K |   |   |   |   |   |   | Q |
| L |   |   |   |   |   |   | R |
| M |   |   |   |   | 110 |   | S |
| N |   |   |   |   |   |   | T |

240

120

Figure 2A

130

200B

| A | B | C | D | E | F | G | I |
|---|---|---|---|---|---|---|---|
| J |   |   |   |   |   |   | P |
| K |   |   |   |   |   |   | Q |
| L |   |   | L | 110 |   |   | R |
| M |   |   |   |   |   |   | S |
| N |   |   |   |   |   |   | T |

120

Figure 2B

130

200C

| A | B | C | D | E | F | G | I |
|---|---|---|---|---|---|---|---|
| J | | | | | C | | P |
| K | | | | | | | Q |
| L | | | L | | 110 | | R |
| M | | | | | | | S |
| N | | | | | | | T |

120

Figure 2C

130

200D

| A | B | C | D | E | F | G | I |
|---|---|---|---|---|---|---|---|
| J | Π | | | | C | | P |
| K | | | | | | | Q |
| L | | | L | | 110 | | R |
| M | | | | | | | S |
| N | | | | | | | T |

120

Figure 2D

Start input ⌇310

Select
background ⌇320

Select icon ⌇330

Place icon ⌇340

350

N   Done?   Y

Generate
password ⌇360

Figure 3

# EP 2 254 071 A1

**Europäisches Patentamt**

**European Patent Office**

**Office européen des brevets**

## EUROPEAN SEARCH REPORT

Application Number

EP 09 30 5554

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 821 933 A (KELLER NEAL MARTIN [US] ET AL) 13 October 1998 (1998-10-13) | 1-3,6-9 | INV. G06F21/00 |
| Y | * column 2, paragraph 5 * <br> * column 6, paragraph 4 * ----- | 4,10 | |
| X | US 2006/021024 A1 (PARK HYUN-CHEOL [KR]) 26 January 2006 (2006-01-26) | 1,7 | |
| A | * paragraph [0025]; figure 3 * <br> * paragraph [0042] - paragraph [0043] * ----- | 2-6,8-10 | |
| Y | X. Suo, Y. Yhu and G. S. Owen: "Graphical Passwords: A Survey" Computer Security Applications Conference, 21st Annual 9 December 2005 (2005-12-09), XP002563771 ISSN: 1063-9527 ISBN: 0-7695-2461-3 Retrieved from the Internet: URL:http://ieeexplore.ieee.org/stamp/stamp.jsp?tp=&arnumber=1565273&isnumber=33214> [retrieved on 2010-01-18] | 4,10 | |
| A | * page 3, column 1, paragraph 1 * ----- | 1-3,5-9 | **TECHNICAL FIELDS SEARCHED (IPC)** <br><br> G06F |
| Y | WO 2007/042857 A1 (NOKIA CORP [FI]; HUOTARI VESA [FI]; MAEKI NINA [FI]) 19 April 2007 (2007-04-19) | 4,10 | |
| A | * abstract * ----- | 1-3,5-9 | |
| Y | WO 2005/101159 A1 (SCHLUDERBACHER HELMUT [AT]) 27 October 2005 (2005-10-27) | 4,10 | |
| A | * page 9 - page 11 * ----- | 1-3,5-9 | |

The present search report has been drawn up for all claims

| Place of search | Date of completion of the search | Examiner |
|---|---|---|
| Munich | 25 January 2010 | Koblitz, Birger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 30 5554

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2010

| Patent document cited in search report | | Publication date | Patent family member(s) | | Publication date |
|---|---|---|---|---|---|
| US 5821933 | A | 13-10-1998 | JP | 4006036 B2 | 14-11-2007 |
| | | | JP | 9128208 A | 16-05-1997 |
| US 2006021024 | A1 | 26-01-2006 | CN | 1719376 A | 11-01-2006 |
| | | | JP | 2006031700 A | 02-02-2006 |
| | | | KR | 20060004851 A | 16-01-2006 |
| WO 2007042857 | A1 | 19-04-2007 | CA | 2623503 A1 | 19-04-2007 |
| | | | JP | 2009510643 T | 12-03-2009 |
| WO 2005101159 | A1 | 27-10-2005 | AT | 413894 B | 15-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5559961 A

**Non-patent literature cited in the description**

- **Suo et al.** *Graphical Passwords: A Survey, http://www.acsac.org/2005/papers/89.pdf*
- Authentication Using Graphical Passwords: Basic Results. *Human-Computer Interaction International (HCII 2005)*
- Authentication Using Graphical Passwords: Effects of Tolerance and Image Choice. *Symposium on Usable Privacy and Security (SOUPS),* 2005
- PassPoints: Design and Longitudinal Evaluation of a Graphical Password System. *International Journal of Human Computer Studies,* 2004, vol. 63, 102-127